# EUROPEAN PATENT SPECIFICATION

(11) **EP 2 129 535 B1**
(45) Date of publication and mention of the grant of the patent: **02.02.2011**
(21) Application number: 08723675.8
(22) Date of filing: 24.03.2008
(51) Int. Cl.: B60C 27/18, D04B 21/10

(54) **TIRE CHAIN MADE OF HARD WOVEN FABRIC HAVING TRIPLE-LAYER STRUCTURE**
REIFENKETTE AUS HARTGEWEBTEM STOFF MIT DREISCHICHT-STRUKTUR
CHAÎNE ANTIDÉRAPANTE FABRIQUÉE À PARTIR DE TISSU TISSÉ DUR POSSÉDANT UNE STRUCTURE À TROIS COUCHES

(30) Priority: 30.03.2007 KR 20070031833; 26.04.2007 KR 20070040994
(43) Date of publication of application: 09.12.2009
(73) Proprietor: Wook Sung Co., Ltd., Gyeongsangbuk-do 719-842 (KR)
(72) Inventor: KIM, Dong Hyeon, Gyeongsangbuk-do 769-921 (KR)
(74) Representative: Thun, Clemens
(86) International application number: PCT/KR2008/001639
(87) International publication number: WO 2008/120884

(56) References cited:
- EP-A- 1 577 428
- EP-A1- 1 745 948
- WO-A-00/59745
- WO-A1-00/59745
- DE-A1-102005 029 755
- GB-A- 2 352 735
- JP-A- 2003 054 232
- KR-A- 20020 073 369

## Description

### Technical Field

The present invention relates to a tire chain for a vehicle, and more particularly to a tire chain comprising a main body unit mounted between a tire and a road surface, being made of a warp knit fabric of a triple-layer structure having a predetermined elasticity.

### Background Art

In general, a tire chain (also called a 'snow chain') prevents a slip of a vehicle on a snowy or icy road, by being fixed to a tire tread, that is, an outer surface of a tire directly contacting a road surface.

General tire chains are manufactured using various steel materials such as special steel and synthetic resins such as urethane. The tire chains include a steel link chain, a wire chain configured by connecting square, pentagonal or hexagonal rollers, and a urethane chain configured by connecting flat pads on which spikes are protruded.

However, in spite of some differences among them; the aforementioned conventional tire chains are heavy to use, and mounting and dismounting of then are inconvenient. In addition, the conventional tire chains generate serious noise by friction with the road surface, deteriorate a riding comfort due to a rough surfaces thereof, and also deteriorate a running speed of the vehicle.

Especially, the steel tire chain is inappropriate for a longtime use since it easily rusts and cunts at linking parts and furthermore is too heavy to conveniently handle. The urethane tire chain is inexpensive although being lightweight.

Moreover, since the conventional tire chains are formed by connecting links, rollers and pads one by one, great effort and time are required in manufacturing the tire chain due to the complicated structure.

To this end, recently, a tire chain different from the conventional ones in terms of being made of a thin fabric has been introduced. Although being relatively cheap and lightweight, the fabric tire chain was suitable just for a one-time use because it so easily gets torn, worn or wet.
An example embodiment, with presumably both durability and road grip being inferior to a metal tire chain, can be found in the WO 00/59745 A, comprising a main body unit, preferably of a woven polyamide, coated with polyurethane, for enclosing an outer surface of a tire and a circular rubber belt for fastening the main body unit.
In order to improve the road grip of tire fabrics a suggestion given by the EP 1 557 428 A1 comprises a special fabric with naps. However, utmost important durability of a tire fabric is lacking.
Methods of other technical fields propose various fabrication techniques to obtain a durable fabric, as for example the GB 2 352 735 A or the DE 10 2005 029 755 A1 stipulate a triple-layer fabric. Still a suitable application as a tire fabric remains in doubt.

Accordingly, there has been an increasing need for an improved tire chain capable of overcoming the defects of the conventional tire chains by using a special fabric rather than a mere double cloth or general monolayer fabrics, the special fabric having excellent strength and durability and being effective in preventing hydroplaning.

### Disclosure of Invention

### Technical Problem

Therefore, the present invention has been made in view of the above problems, and it is an object of the present invention to provide a tire chain made of a warp knit fabric having a triple-layer structure, capable of being conveniently mounted to and dismounted from a tire by any user and having excellent stability and durability by almost maintaining its initial mounting state during running of a vehicle.

It is another object of the present invention to provide a tire chain made of a warp knit fabric having a triple-layer structure, being excellent in braking power, turning stability and smooth running and capable of promptly and elastically detaching foreign substances such as snow, ice, water and soil therefrom, efficiently preventing hydroplaning and supplying a silent and comfortable ride.

It is still another object of the present invention to provide a tire chain made of a warp knit fabric having a triple-layer structure, capable of improving productivity thereof by simplifying the structure, improving convenience of carriage, maintenance and use, and reducing frequency of repair.

### Technical Solution

In accordance with an aspect of the present invention, the above and other objects can be accomplished by the provision of a tire chain comprising a main body unit for enclosing an outer surface of a tire and a fastening unit for fastening the main body unit, wherein the main body unit comprises a fabric main body formed of a triple-layer warp knitting fabric knitted by a warp knitting machine and constituted by an inner skin layer tightly contacting the outer surface of the tire, an outer skin layer contacting a road surface, and an intermediate layer interconnecting the inner and the outer skin layers, and wherein the outer skin layer includes a plurality of hollows arranged thereon.

The fabric main body may comprise a tightening part formed by sewing an elastic band along an outer circumference of an inner side of the fabric main body, and a fixing part formed by sewing a non-elastic band along an outer circumference of an outer side of the fabric main body.

### Advantageous Effects

A tire chain according to the embodiment of the present invention does not frequently require repair thereof due to its firm triple-layer structure made of a warp knit fabric and its stable shape. Also, the tire chain is capable of efficiently preventing hydroplaning, thereby enabling a longtime running, and supplying good braking power, turning stability, smooth running, and riding comfort. In addition, mounting and dismounting with respect to a tire can be easily performed by any user. Moreover, since being lightweight, the tire chain can be conveniently handled.

### Brief Description of the Drawings

The above and other objects, features and other advantages of the present invention will be more clearly understood from the following detailed description taken in conjunction with the accompanying drawings, in which:

FIG. 1 is a perspective view of a tire chain according to an embodiment of the present invention;

FIG. 2 is a perspective view showing the tire chain according to the embodiment of the present invention as mounted to a tire, with a partial enlarged view of a fabric main body of the tire chain;

FIG. 3 is a perspective view showing the tire chain according to the embodiment of the present invention, in a folded state;

FIG. 4 is a sectional view showing the structure of the fabric main body of the tire chain according to the embodiment of the present invention;

FIG. 5 is a partially enlarged sectional view of an outer skin layer of the fabric main body of FIG. 4; and

FIG. 6 is a structural view schematically showing a warp knitting machine knitting the fabric main body of the tire chain.

### Best Mode for Carrying Out the Invention

Hereinafter, an embodiment of the present invention will be described in greater detail with reference to the accompanying drawings. Throughout the drawings, the same reference numerals refer to the same functional elements.

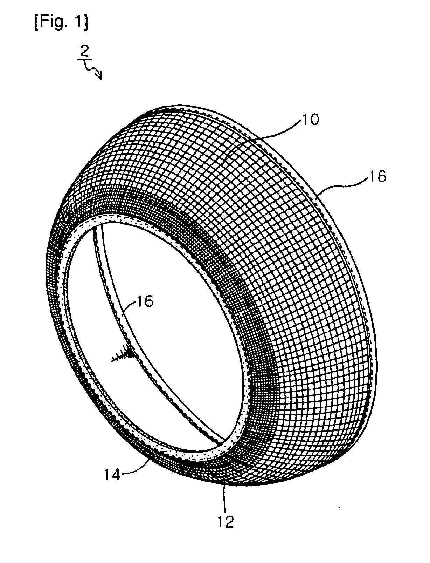

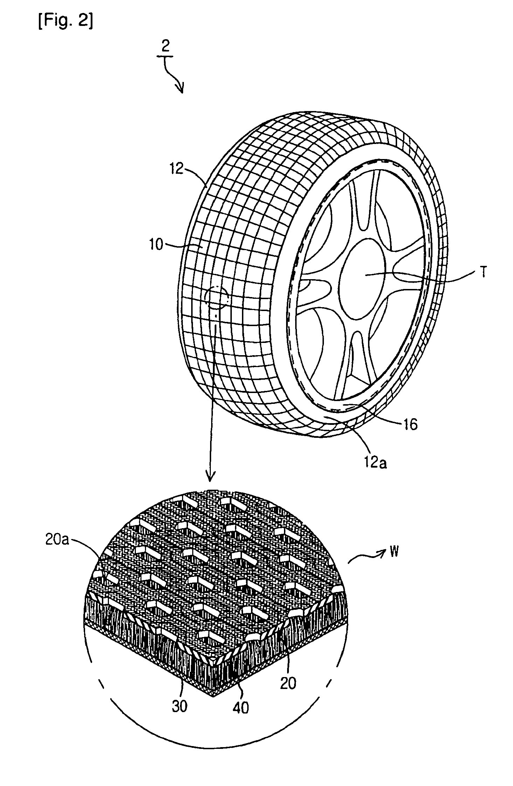

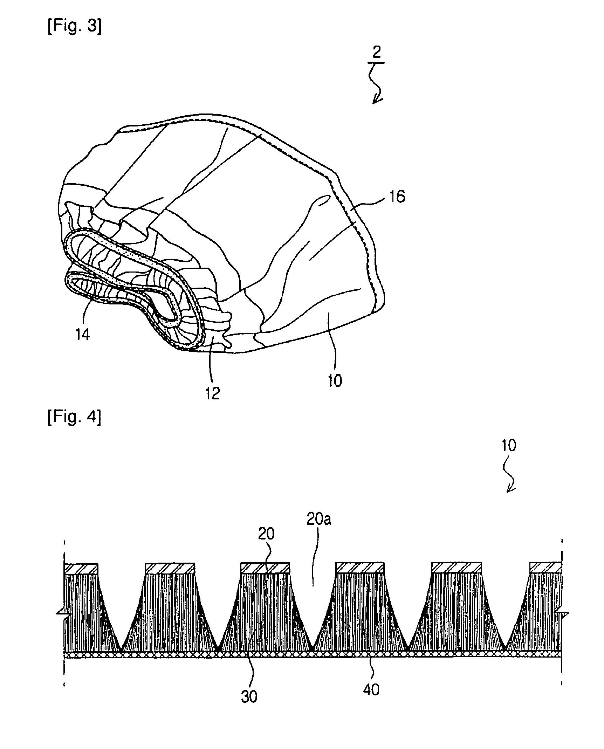

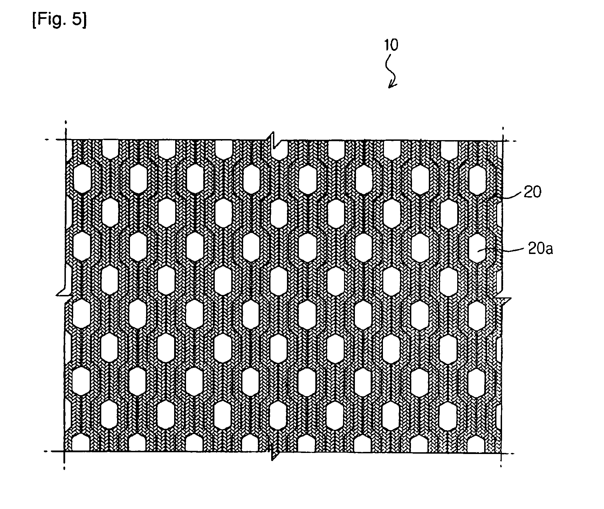

FIG. 1 is a perspective view of a tire chain according to an embodiment of the present invention, FIG. 2 is a perspective view showing the tire chain according to the embodiment of the present invention as mounted to a tire, with a partial enlarged view of a fabric main body of the tire chain, and FIG. 3 is a perspective view showing the tire chain according to the embodiment of the present invention, in a folded state. FIG. 4 is a sectional view showing the structure of the fabric main body of the tire chain according to the embodiment of the present invention, and FIG. 5 is a partially enlar ged sectional view of an outer skin layer of the fabric main body of FIG. 4.

A tire chain 2 according to the embodiment of the present invention is **characterized in that** a main body unit thereof has a triple-layer structure made of a warp knitting fabric W to have a bit of elasticity. The structure of a fabric main body 10 made of the warp knitting fabric W of the triple-layer structure by a warp knitting machine 100 will be described later in detail.

Referring to FIG. 1, the main body unit of the tire chain 2 is configured such that a circumferential length of the fabric main body 10 is in a range of 85∼103% of a maximum circumferential length of a tire T to which the tire chain 2 is mounted.

A fastening unit of the tire chain 2 comprises a fixing part 16 formed by sewing a non-elastic band along an outer circumference of an outer side of the fabric main body 10, the outer side exposed outward when mounted to the tire T, and a tightening part 14 formed by sewing an elastic band along an outer circumference of an inner side of the fabric main body 10.

More specifically, the reason for setting the circumferential length of the fabric main body 10 to 85∼103% of the maximum circumferential length of the tire T is because the fabric main body 10, which is made of the warp knitting fabric W of the triple-layer structure, has a predetermined ratio of expansion and contraction.

In other words, even though the circumferential length of the fabric main body 10 is formed to be less than the maximum circumferential length of the tire T by at most 15%, the fabric main body 10 can be expanded enough for mounting to the tire T and then restored to its initial state upon completion of the mounting. Furthermore, although the circumferential length of the fabric main body 10 is formed to be greater than the maximum circumferential length of the tire T by at most 3%, the fabric main body 10 can be tightly mounted to the tire T.

On the other hand, if the circumferential length of the fabric main body 10 is less than the maximum circumferential length of the tire T by more than 15%, it is very difficult to mount the fabric main body 10 to the tire T and although being mounted, the fabric main body 10 is highly tensed. When the circumferential length of the fabric main body 10 is greater than the maximum circumferential length of the tire T by more than 3%, the fabric main body 10 is hardly able to keep airtight contact with a surface of the tire T. In this case, a rear part of the fabric main body 10 would be gradually loosened according to running of a vehicle, and even separated from the tire T.

Here, the fabric main body 10 of the tire chain 2 preferably has approximately 2∼15% of ratio of expansion and contraction. Such a degree of expansion and contraction ratio is for optimum foreign substance removal efficiency, braking power, turning stability and smooth running, as experimentally proven by the present inventor.

The warp knitting fabric W of the triple-layer structure constituting the fabric main body 10 already has a predetermined elasticity due to its knitting structure. To increase the expansion and contraction ratio up to 2∼15%, inner and outer skin layers 40 and 20 of the warp knitting fabric W are knitted using synthetic filament yam, especially having good elasticity, such as urethane, spandex, Lycra and so on.

The fixing part 16 of the fastening unit provided at both sides of the fabric main body 10 is formed by a webbing made of a synthetic resin such as nylon to have no elasticity at all but high strength, such that the circumferential length of the fixing part 16 is 10∼90%, and more preferably 50∼80% of the maximum circumferential length of the tire T.

Alternatively, the fixing part 16 may be formed by interconnecting two or more belts across one another at a front center of the tire T. Also, as shown in FIG. 2, a wing part 12a formed of a non-elastic fabric may be further provided between the fixing part 16 and the fabric main body 10.

The tightening part 14 disposed opposite to the fixing part 16 is formed of a rubber band having high strength so that the tire chain 2 can be force-fitted with the tire T. In addition, a wing part 12 may be further formed between the tightening part 14 and the fabric main body 10 using an elastic fabric.

More particularly, the wing part 12 between the tightening part 14 and the fabric main body 10 is made of a warp knitting fabric or another fabric, having a 2∼10% greater expansion and contraction ratio than the fabric main body 10. The wing part 12 is formed in width of 5∼15cm and connected to the fabric main body 10 by sewing. Thus, the wing parts are formed at both sides of the fabric main body 10 in the same manner.

As described above, the tire chain 2 according to the embodiment of the present invention is wholly formed of a relatively soft material and therefore can be folded into a desired form as shown in FIG. 3.

Also, by configuring the tire chain 2 as described above, the fabric main body 10 is capable of efficiently detaching foreign substances including snow, ice, water and soil therefrom and preventing hydroplaning. In addition, since the fabric main body 10 can be mounted in tight contact with the tire T, any space would not be generated between the fabric main body 10 and the outer surface of the tire T even during running. Therefore, the tire chain 2 is not affected by a centrifugal force.

Furthermore, at one side of the fabric main body 10, the tightening part 14 pulls the fabric main body 10 by elastic attraction in cooperation with the wing part 12. At the other side of the fabric main body 10, the fixing part 16 prevents the fabric main body 10 from rolling in, by its high strength and fixing force. Accordingly, the initial mounting state of the tire chain 2 can be maintained while the vehicle is running, thereby elongating the life span of the tire chain 2.

Additionally, a cylindrical wick may be inserted in an end of the fixing part 16 of the tire chain 2, the wick which is made of any one of Kevlar, urethane and steel to have a less circumferential length than the fixing part 16 by 2∼10%, and preferably 2∼3%. Here, the wick enhances the fixing force of the fixing part 16.

The fabric main body 10 of the tire chain 2 may have different colors of the inner skin layer 40 and the outer skin layer 20. In this case, the user can easily check a worn degree of the tire chain 2 by the color of the inner skin layer 40 seen through the worn outer skin layer 20, and timely perform the replacement.

Hereinafter, the structure of the fabric main body 10 of the tire chain 2 according to the embodiment of the present invention, formed of the warp knitting fabric W of one sheet comprising three layers will be described in detail.

As shown in FIG. 2 and FIG. 4, the fabric main body 10 formed of the warp knitting fabric W comprises the inner skin layer 40 brought into tight contact with a tire tread, the outer skin layer 20 contacting a road surface, and an intermediate layer 30 having elasticity and connecting the inner skin layer 40 with the outer skin layer 20, while forming fine spaces between the inner and the outer skin layers 40 and 20. The three layers of the fabric main body 10 are knitted at one time.

On the outer skin layer 20, a plurality of hollows 20a are arranged in a regular pattern as shown in FIG. 2, FIG. 4 and FIG. 5. The hollows 20a may have any one shape selected from a circle, an oval, a square, a pentagon and a hexagon. Here, a hexagonal honeycomb shape is most preferable because a hexagonal hollow 20a maximizes a contacting area with the road surface, thereby maximizing friction with the road surface and effectively preventing a slip or sway of a vehicle body. Accordingly, in addition, running, turning and stopping of the vehicle can be safely performed.

The maximum size of the hollow 20a, that is, the maximum diameter or diagonal is preferably within a range of 2∼10mm because if the diameter or diagonal of the hollow 20a is beyond the above range, foreign substances such as snow, ice, water and soil attached to the tire chain 2 as caught in the hollow 20a are not easily removed. Therefore, the friction may be deteriorated so that the tire chain 2 may not normally function.

The inner skin layer 40 of the fabric main body 10 is formed into various types of compact structures in order for the tight contact with the tire T. The intermediate layer 30 connects the outer skin layer 20 and the inner skin layer 40 to each other through a compact and straight structure. Especially at the hollows 20a of the outer skin layer 20, the intermediate layer 30 is formed along an outline of a bottom of the hollows 20a.

The fabric main body 10 formed of the triple-layer warp knitting fabric W thus has a predetermined elasticity by existence of the hollows 20a of the outer skin layer 20 and the intermediate layer 30. Such elasticity helps prevent and relieve the hydroplaning during use of the tire chain 2 comprising the fabric main body 10.

More specifically, when the tire chain 2 is used on a snowy road, foreign substances such as snow, ice, water and soil are attached to the outer skin layer 20 and the hollows 20a of the fabric main body 10 interposed between the tire T and the road surface. While the tire T is rotating, as the outer skin layer 20 is exposed to the outside, the intermediate layer 30 being compressed simultaneously expands to its initial state, thereby elastically shaking off the foreign substances. Therefore, the tire chain 2 according to the embodiment of the present invention is not easily wetted in spite of a longtime use.

Especially, the fabric main body 10 of the tire chain 2 needs to be structured to have proper thickness and weight to achieve the optimum condition of the tire chain 2.

For this purpose, the three layers of the fabric main body 10 formed of the warp knitting fabric W are knitted by synthetic filament yarn into respectively different thicknesses from one another according to the functions of each. For example, the yarn forming the inner skin 20 has thickness of 50-400 deniers, the yarn of the intermediate layer 30 has relatively smaller thickness, that is, 20-150 deniers, and the yarn of the outer skin layer 40 has the greatest thickness, that is, 70∼1,000 deniers to maximize strength, abrasiveness and friction. In addition, the fabric main body 10 is formed to have thickness of 2∼8mm and weight of 0.1∼1kg.

Here, the thickness of the synthetic filament yarn constituting the respective layers of the fabric main body 10 enhances the friction of the tire chain 2. In case that the thickness and the weight of the fabric main body 10 are greater than the above ranges, the yarn of the intermediate layer 30 may be cut as being compressed by the vehicle body during use. When the thickness and the weight are smaller than the above ranges, the elasticity of the tire chain 2 becomes insufficient to effectively detach the foreign substances.

When the fabric main body 10 is manufactured to satisfy the above conditions, the tire chain 2 comes to have proper elasticity. If the fabric main body 10 is manufactured to have greater elasticity, the tight contact between the fabric main body 10 and the tire T may not be achieved. Moreover, a rear part of the fabric main body 10 may be loosened by centrifugal force when the tire T rotates.

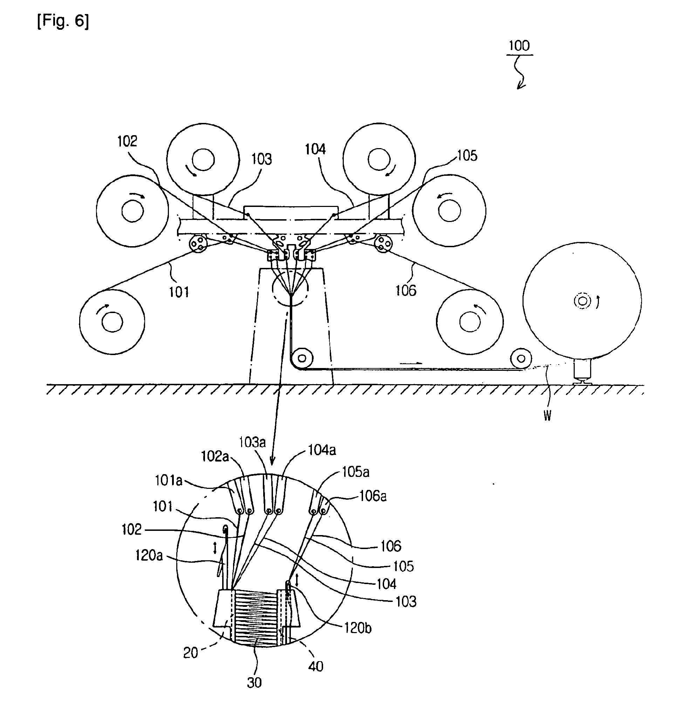

Thus, the fabric main body 10 constituting the tire chain 2 is formed by the triple-layer warp knitting fabric W which is knitted at one time by a warp knitting machine 100 as shown in FIG. 6 to have a predetermined elasticity.

FIG. 6 schematically shows the structure of the warp knitting machine 100 for structuring the fabric main body 10. Main parts of the warp knitting machine 100 for structuring the triple-layer warp knitting fabric W will be briefly described with reference to FIG. 6.

In the warp knitting machine 100, first to sixth yarns 101, 102, ... , 106 reeled from six beams are connected respectively to first to sixth guide bars 101a, 102a, ... , 106a moved vertically and horizontally by a pattern heel (not shown) in accordance with a shape of the triple-layer warp knitting fabric W. At a lower part of the first to sixth guide bars 101a, 102a, ... , 106a which perform vertical and horizontal movements, first and second needles 120a and 120b performing vertical movements sequentially draw the first to sixth yarns 101, 102, ... , 106 being guided by the first to sixth guide bars 101a, 102a, ... , 106a, and thereby knit the triple-layer warp knitting fabric W in a horizontal direction.

For example, as shown in an enlarged view at a lower part of FIG. 6, the first yarn 101 and the second yarn 102 having the greatest thickness form the outer skin layer 20, the fifth yarn 105 and the sixth yarn 106 having medium thickness form the inner skin layer 40, and the third yarn 103 and the fourth yarn 104 having the smallest thickness form the intermediate layer 30. Here, the first and the second yarns 101 and 102 are knitted by the first needle 120a, and the fifth and the sixth yarns 105 and 106 are knitted by the second needle 120b. The third and the fourth yarns 103 and 104 are knitted alternately using the first and the second needles 120a and 120b, such that the intermediate layer 30 can interconnect the inner skin layer 40 and the outer skin layer 20.

Although the preferred embodiments of the present invention have been disclosed for illustrative purposes, those skilled in the art will appreciate that various modifications, additions and substitutions are possible, without departing from the scope as disclosed in the accompanying claims.

### Industrial Applicability

The present invention can be applied to manufacturing of a tire chain.

## Claims

1. A tire chain (2) comprising a main body unit for enclosing an outer surface of a tire and a fastening unit for fastening the main body unit, **characterized in that** the main body unit comprises a fabric main body (10) formed of a triple-layer warp knitting fabric (w) knitted by a warp knitting machine (100) and constituted by an inner skin layer (40) tightly contacting the outer surface of the tire, an outer skin layer (20) contacting a road surface, and an intermediate layer (20) interconnecting the inner and the outer skin layers (40, 20) and the outer skin layer (40) includes a plurality of hollows (20a) arranged thereon.

2. The tire chain (3) made of a triple-layer warp knitting fabric (w) according to claim 1, **characterized in that** a circumferential length of the fabric main body (10) is within a range of 85∼103% of the maximum circumferential length of the tire (T).

3. The tire chain (2) made of a triple-layer warp knitting fabric (w) according to claim 1 or claim 2, wherein the fabric main body (10) has 2∼15% of ratio of expansion and contraction.

4. The tire chain (2) made of a triple-layer warp knitting fabric (w) according to claim 1 or claim 2, **characterized in that** the fabric main body (10) is knitted by synthetic filament yarns (102,...,106) of different thicknesses so that a yarn forming the inner skin has thickness of 50-400 deniers, a yarn forming the intermediate layer has thickness of 20-150 deniers, and a yarn forming the outer skin layer has thickness of 70∼1,000 deniers and so that the fabric main body has thickness of 2∼8mm.

5. The tire chain (2) made of a triple-layer warp knitting fabric (2) according to claim 1, **characterized in that** the hollows (20a) have any one shape selected from a circle, an oval, a square, a pentagon and a hexagon, and have the maximum diameter or diagonal of 2∼10mm.

6. The tire chain (2) made of a triple-layer warp knitting fabric (w) according to claim 1, **characterized in that** the fabric main body (10) comprises a tightening part (14) formed by sewing an elastic band along an outer circumference of an inner side of the fabric main body (10), and a fixing part (16) formed by sewing a non-elastic band along an outer circumference of an outer side of the fabric main body (10).

7. The tire chain (2) made of a triple-layer warp knitting fabric (w) according to claim 6, **characterized in that** a circumferential length of the fixing part (16) is within a range of 10-90% of the maximum circumferential length of the tire (T).

8. The tire chain (2) made of a triple-layer warp knitting fabric (w) according to claim 6, further comprising a wing part (12) formed by a fabric having a 2∼10% greater ratio of expansion and contraction than the fabric main body (10), and disposed between the tightening part (14) and the fabric main body (10).

9. The tire chain (2) made of a triple-layer warp knitting fabric (w) according to claim 6, further comprising a win part (12) formed by a non-elastic fabric and disposed between the fixing part (16) and the fabric main body (10).

## Patentansprüche

1. Reifenkette (2), die eine Hauptkörpereinheit zum Umschließen einer äußeren Oberfläche eines Reifens und eine Befestigungseinheit zum Befestigen der Hauptkörpereinheit aufweist,
**dadurch gekennzeichnet, dass** die Hauptkörpereinheit einen Gewebehauptkörper (10) aufweist, der aus einem von einer Kettenwirkmaschine (100) gewirkten Dreischichtkettenwirkgewebe (W) ausgebildet ist und durch eine innere Randschicht (40), welche die Außenoberfläche des Reifens eng kontaktiert, eine äußere Randschicht (20), die eine Straßenoberfläche kontaktiert, und eine Zwischenschicht (30), welche die inneren und äußeren Randschichten (40, 20) miteinander verbindet, gebildet wird, wobei die äußere Randschicht (40) eine Vielzahl von darauf angeordneten Hohlräumen (20a) umfasst.

2. Aus einem Dreischichtkettenwirkgewebe (W) gefertigte Reifenkette (2) gemäß Anspruch 1,
**dadurch gekennzeichnet, dass** eine Umfangslänge des Gewebehauptkörpers (10) innerhalb eines Bereichs von 85 - 103% der maximalen Umfangslänge des Reifens (T) ist.

3. Aus einem Dreischichtkettenwirkgewebe (W) gefertigte Reifenkette (2) gemäß Anspruch 1 oder Anspruch 2, wobei der Gewebehauptkörper (10) ein Ausdehnungs- und Schrumpfungsverhältnis von 2 - 15% hat.

4. Aus einem Dreischichtkettenwirkgewebe (W) gefertigte Reifenkette (2) gemäß Anspruch 1 oder Anspruch 2,
**dadurch gekennzeichnet, dass** der Gewebehauptkörper (10) durch synthetische Filamentgarne (102, ..., 106) mit verschiedenen Dicken gewirkt ist, so dass ein Garn, das die innere Randschicht bildet, eine Dicke von 50 - 400 Denier hat, ein Garn, das die Zwischenschicht bildet, eine Dicke von 20 - 150 Denier hat und ein Garn, das die äußere Randschicht bildet, eine Dicke von 70 - 1000 Denier hat und so dass der Gewebehauptkörper eine Dicke von 2 - 8 mm hat.

5. Aus einem Dreischichtkettenwirkgewebe (W) gefertigte Reifenkette (2) gemäß Anspruch 1,
**dadurch gekennzeichnet, dass** die Hohlräume (20a) irgendeine Form haben, die aus einem Kreis, einem Oval, einem Quadrat, einem Fünfeck und einem Sechseck ausgewählt ist und den maximalen Durchmesser oder Diagonale von 2 - 10 mm haben.

6. Aus einem Dreischichtkettenwirkgewebe (W) gefertigte Reifenkette (2) gemäß Anspruch 1,
**dadurch gekennzeichnet, dass** der Gewebehauptkörper (10) einen Festklemmteil (14), der ausgebildet wird, indem ein elastisches Band entlang eines Außenumfangs einer Innenseite des Gewebehauptkörpers (10) genäht wird, und einen Befestigungsteil (16) aufweist, der ausgebildet wird, indem ein nicht elastisches Band entlang eines Außenumfangs einer Außenseite des Gewebehauptkörpers (10) genäht wird.

7. Aus einem Dreischichtkettenwirkgewebe (W) gefertigte Reifenkette (2) gemäß Anspruch 6,
**dadurch gekennzeichnet, dass** eine Umfangslänge des Befestigungsteils (16) innerhalb eines Bereichs von 10 - 90% der maximalen Umfangslänge des Reifens (T) ist.

8. Aus einem Dreischichtkettenwirkgewebe (W) gefertigte Reifenkette (2) gemäß Anspruch 6,
die ferner einen Flügelteil (12) aufweist, der aus einem Gewebe mit einem um 2 - 10% größeren Ausdehnungs- und Schrumpfungsverhältnis als der Gewebehauptkörper (10) gebildet und zwischen dem Festklemmteil (14) und dem Gewebehauptkörper (10) angeordnet ist.

9. Aus einem Dreischichtkettenwirkgewebe (W) gefertigte Reifenkette (2) gemäß Anspruch 6, die ferner einen Flügelteil (12) aufweist, der aus einem nicht elastischen Gewebe ausgebildet und zwischen dem Befestigungsteil (16) und dem Gewebehauptkörper (10) angeordnet ist.

## Revendications

1. Chaîne antidérapante (2) comprenant une unité de corps principal destinée à entourer une surface extérieure d'un pneu et une unité de fixation destinée à fixer l'unité de corps principal,
**caractérisée en ce que** l'unité de corps principal comprend un corps principal en tissu (10) formé d'un tissu (w) de tricotage en chaîne à triple couche par un métier chaîne (100) et constitué par une couche de peau intérieure (40) touchant hermétiquement la surface extérieure du pneu, une couche de peau extérieure (20) touchant une surface de route et une couche intermédiaire (20) interconnectant les couches de peau intérieure et extérieure (40, 20), et la couche de peau extérieure (40) contient une pluralité de creux (20a) disposés dessus.

2. Chaîne antidérapante (2) fabriquée en un tissu (w) de tricotage en chaîne à triple couche selon la revendication 1, **caractérisée en ce qu'**une longueur circonférentielle du corps principal en tissu (10) est comprise dans une plage entre 85 et 103 % de la longueur circonférentielle maximum du pneu (T).

3. Chaîne antidérapante (2) fabriquée en un tissu (w) de tricotage en chaîne à triple couche selon la revendication 1 ou 2, dans laquelle le corps principal en tissu (10) présente un rapport de détente et de contraction compris entre 2 et 15 %.

4. Chaîne antidérapante (2) fabriquée en un tissu (w) de tricotage en chaîne à triple couche selon la revendication 1 ou 2, **caractérisée en ce que** le corps principal en tissu (10) est tricoté par des fils continus synthétiques (102, ..., 106) de différentes épaisseurs de sorte qu'un fil formant la peau intérieure présente une épaisseur de 50 à 400 deniers, un fil formant la couche intermédiaire présente une épaisseur de 20 à 150 deniers et un fil formant la couche de peau extérieure présente une épaisseur de 70 à 1 000 deniers et de sorte que le corps principal en tissu présente une épaisseur de 2 à 8 mm.

5. Chaîne antidérapante (2) fabriquée en un tissu (w) de tricotage en chaîne à triple couche selon la revendication 1, **caractérisée en ce que** les creux (20a) possèdent toute forme sélectionnée parmi un cercle, un ovale, un carré, un pentagone et un hexagone et présente le diamètre maximum ou la diagonale comprise entre 2 et 10 mm.

6. Chaîne antidérapante (2) fabriquée en un tissu (w) de tricotage en chaîne à triple couche selon la revendication 1, **caractérisée en ce que** le corps principal en tissu (10) comprend une partie de serrage (14) formée par la couture d'une bande élastique le long d'une circonférence extérieure d'un côté intérieur du corps principal en tissu (10), et une partie de fixation (16) formée par la couture d'une bande non élastique le long d'une circonférence extérieure d'un côté extérieur du corps principal en tissu (10).

7. Chaîne antidérapante (2) fabriquée en un tissu (w) de tricotage en chaîne à triple couche selon la revendication 6, **caractérisée en ce qu'**une longueur circonférentielle de la partie de fixation (16) est comprise dans une plage de 10 à 90 % de la longueur circonférentielle maximum du pneu (T).

8. Chaîne antidérapante (2) fabriquée en un tissu (w) de tricotage en chaîne à triple couche selon la revendication 6, comprenant en outre une partie d'aile (12) formée par un tissu présentant un rapport de détente et de contraction supérieur de 2 à 10 % à celui du corps principal en tissu (10), et disposée entre la partie de serrage (14) et le corps principal en tissu (10).

9. Chaîne antidérapante (2) fabriquée en un tissu (w) de tricotage en chaîne à triple couche selon la revendication 6, comprenant en outre une partie d'aile (12) formée par un tissu non élastique et disposée entre la partie de fixation (16) et le corps principal en tissu (10).
